# EUROPEAN PATENT APPLICATION

(11) **EP 2 757 760 A1**
(43) Date of publication of application: **23.07.2014**
(21) Application number: 13199909.6
(22) Date of filing: 31.12.2013
(51) Int. Cl.: H04M 1/04, H04M 1/23, H04M 1/725, G06F 1/16

(54) **Accessory enclosure and input device**

(30) Priority: 21.01.2013 HK 13100883
(71) Applicant: 3 P.M. China Manufacturing Ltd, Hong Kong SAR (HK)
(72) Inventor: Beasley, Nigel, Hong Kong SAR (CN); McKay, Clyde, Scottsdale, AZ Arizona 85260 (US); Markovits, Emánuel Manó, Hong Kong SAR (CN)
(74) Representative: Roberts, Gwilym Vaughan

(57) **Abstract**

The present invention is a case for portable electronic devices. The case has a body which includes a receiving portion for releasably receiving a portable electronic device. The case also has at least one user operable input means for detecting user selection of at least one parameter, and a communication module for providing a communication channel between the case and the portable electronic device. A signal determined from a user selection of the at least one parameter is communicable from the case to the portable electronic device across the communication channel.

## Description

### FIELD OF THE INVENTION

The present invention relates generally to portable electronic devices, and in particular to enhancing user interaction with such portable electronic devices.

### BACKGROUND OF THE INVENTION

With an increasing prevalence of portable digital display devices in today's modern society, many of the population own and use their portable electronic devices, including mobile phones, smart phones and so called "tablet devices" on a daily basis. Typically, such portable electronic devices have some protection from external elements such as dust, liquids, food and other contaminants provided by a case which at least partially encloses the device. Such cases are typically injection moulded plastic shells which partially enclose the device, and allow user interaction with the device.

The portable electronic devices can be used to control the device to execute many different tasks, including word processing, social media updates, text messaging and email correspondence. In some devices, a QWERTY type mechanical keyboard forms a portion of the device itself, providing keys which can be actuated by a user for input of data to the device. The inclusion of a physical QWERTY keyboard on the device enables the user to locate their fingers on the desired keys of the keyboard, providing tactile feedback and convenient means for capturing user input corresponding to the selected keys. However, as this mechanical keyboard adds to the bulk of the device, and reduces possible display size, some display devices include such a keyboard with a sliding/ hinged arrangement, which increases the bulk of the overall device.

Alternatively, other portable electronic devices seek to provide for user interaction with the device and avoid the extra size associated with a mechanical keyboard through the use of graphically displayed "virtual" keyboards which are displayed on the screen of the device. Such graphically simulated QWERTY keyboards are operated through touch screen interaction with the device, often by contact with the user's fingers or use of a stylus. Still further, some devices are configured for voice operation of the device, through operation of voice recognition software on the device.

However, each of the above solutions do not resolve difficulties associated with interaction between the user and the device, with each of the above solutions requiring significant trade-offs between various parameters including accuracy, size, convenience and speed of input.

### OBJECT OF THE INVENTION

Accordingly, it is an object of the present invention to overcome or at least partially alleviate at least some of the deficiencies associated with the prior art.

### SUMMARY OF THE INVENTION

Broadly speaking, the present invention has described an accessory enclosure or case for a portable electronic display device which is used for enhancing user interaction with the portable electronic display device.

According to a preferred embodiment of the present invention, there is provided a case for a portable electronic device comprising:
a body, the body comprising:
   a receiving portion for releasably receiving a portable electronic device,
   at least one user operable input means for detecting user selection of at least one parameter,
   a communication module for providing a communication channel between the case and the portable electronic device,
   wherein a signal determined from a user selection of the at least one parameter is communicable from the case to the portable electronic device across the communication channel.
   Preferably the receiving portion of the body comprises a protective enclosure at least partially enclosing the portable electronic device in a cavity therein, said receiving portion having an opening in communication with the cavity for allowing passage of the portable electronic device therethrough.
   Advantageously the case for a portable electronic device the at least one user operable input means of the body may be selected from the group including any one or more of the following: mechanical keyboard, sensing region of the body, user actuatable switch.
   The signal may be based upon a combination of an input parameter received at a first user operable input means and at least one other input parameter received at a user operable input means other than the first user operable input means.

The input means may be a mechanical keyboard selected from the group comprising:
a plurality of keys having indicia arranged in the QWERTY layout of a keyboard, a plurality of keys arranged in an alphanumeric array corresponding to numerical values 1-9 and letters A-Z, a plurality of keys arranged in a modified form of the QWERTY keyboard, a plurality of keys arranged in an array and having indicia corresponding to alpha-numeric keys for alphabets other than English, a plurality of keys arranged in an array and having indicia of symbols, a plurality of keys in an array including indicia corresponding to functions of the personal electronic device.

The display screen of the portable electronic device may be oriented such that it is visible to a user when partially enclosed in the case.

The signal transmitted to the portable electronic device may be selected from the group comprising textual input, symbols, and control signals operable to change the state of the portable electronic device.

The case may be configured to establish a further communication channel with other portable electronic display devices.

The communication module of the case may be configured such that the channel is established upon an action selected from the group comprising at least partial removal of the portable electronic device from the protective enclosure, receiving predetermined user input at the user operable input means, releasing the portable electronic device from the case, releasing and rotation of the device to a predetermined orientation, removal of the portable electronic display device from the case together with a predetermined user input sequence at the user operable input means.

Advantageously the portable electronic device may be engaged with the case in a first orientation and upon at least partial removal of the portable electronic device from the case, the case retains the device in a second orientation which is the same as the first orientation.

Optionally, the case may further include a visual indicator for displaying an indication of a change in status of the portable electronic device engaged therein.

In a further aspect of an embodiment of the present invention, there may be provided a system for providing user interaction with a portable electronic display device, the system comprising
a portable electronic display device,
a cover for at least partially enclosing the portable electronic display device, said cover including a user operable input means for receiving a user selection of at least one input parameter,
wherein selection of at least one input parameter at said user operable input device is communicated over a communication channel to the portable electronic display device for processing on the portable electronic device.

The cover may be formed as a protective enclosure which comprises a body enclosing the portable electronic display device in a cavity therein, said body having an opening adjacent the cavity for passage of the portable electronic display device therethrough.

In a further embodiment of the present invention there is provided an enclosure for a portable electronic device comprising:
a body for enclosing the portable electronic device in a cavity therein, said body having an opening in communication with the cavity for allowing passage of the portable electronic device therethrough,
the body including at least one user operable input means for detecting user selection of at least one parameter,
a communication module for providing a communication channel between the case and the portable electronic device,
wherein a signal determined from a user selection of the at least one parameter of the user operable input device is communicable from the case to the portable electronic device across the communication channel.

### BRIEF DESCRIPTION OF THE DRAWINGS

Preferred embodiments of the present invention will be explained in further detail below by way of examples and with reference to the accompanying drawings, in which:-
Fig 1a shows a front perspective view of an exemplary embodiment of an accessory enclosure
Fig 1b shows a rear perspective view of an exemplary embodiment of the accessory enclosure of Fig 1 a.
Figs 1c, 1d show end views of the accessory enclosure of Fig 1 a.
Fig 1e shows the top view of the accessory enclosure of Fig 1 a.
Fig 1f shows the under plan view of the accessory enclosure of Fig 1 b.
Figs 1g, 1h show side views of accessory enclosure of Fig 1 a.
Fig 2a shows an exploded perspective view of the components of the accessory enclosure of Fig 1 a.
Fig 2b shows an exploded side view of the components of the accessory enclosure of Fig 1a.
Fig 3a shows a perspective view of the electrical components of the accessory enclosure of Fig 1 a.
Fig 3b shows an under plan view of the electrical components of the accessory enclosure of Fig 1 a.
Fig 3c shows a top view of the electrical components of the accessory enclosure of Fig 1a.
Fig 3d shows a side view of the electrical components of the accessory enclosure of Fig 1a.
Fig 4a shows a back view of the accessory enclosure of Figure 1a, including the cross sectional line B-B.
Fig 4b shows the cross sectional view of the accessory enclosure shown in Figure 4a with a section at B-B.
Fig 4c shows a front view of the accessory enclosure of Figure 4a with a portion of cross section displayed.
Fig 5a shows the case of Figure 1 a where the portable electronic display device is inside the case, and the communication channel has been established for receiving user input from the case at the device.
Fig 5b shows the case of Fig 5a in operation with the device inside the case and visible through a transparent portion of the case.
Fig 5c shows the case of Figure 1a where the portable electronic display device is partially extracted from the case, and activated.
Fig 5d shows case of Figure 1a where the portable electronic display device is maintained by the case is the same orientation as stored.
Fig 5e shows the case of Figure 1 a where the portable electronic display device is maintained by the case in an alternate configuration to the storage configuration.
Fig 5f shows the case of Figure 1 a where the portable electronic display device is remote from the case.
Fig 5g shows the case of Figure 1 a where the case is used for controlling other electronic devices.
Fig 6 shows the case of Figure 1a in an exemplary mode of use by a user.
Fig. 7a is a front perspective view of a further exemplary embodiment of an accessory enclosure.
Fig. 7b is a rear perspective view if the exemplary embodiment of the accessory enclosure of Fig. 7a.
Fig. 7c, Fig. 7d show end views of the accessory enclosure of Fig. 1a.
Fig. 7e shows a front view of the accessory enclosure of Fig. 7a.
Fig. 7f shows the back view of the accessory enclosure of Fig. 1 a.
Fig. 7g, Fig. 7h show side views of the accessory enclosure of Fig. 7a.
Fig. 8 shows an exploded view of the components of the accessory enclosure depicted in Fig. 7a.

### DETAILED DESCRIPTION OF THE PREFERRED EMBODIMENTS

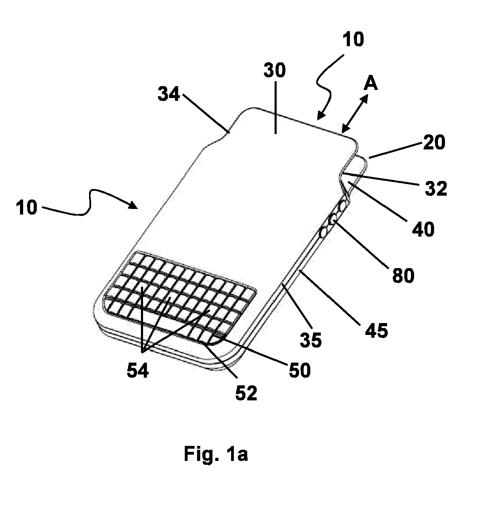

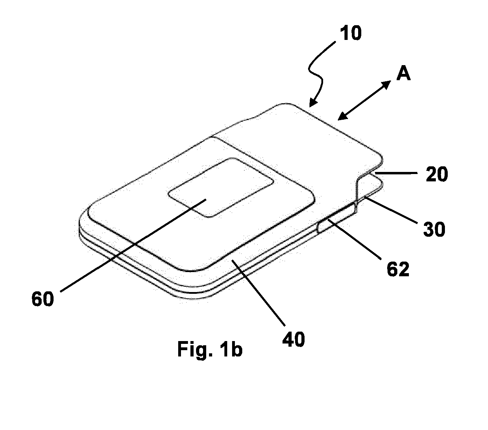

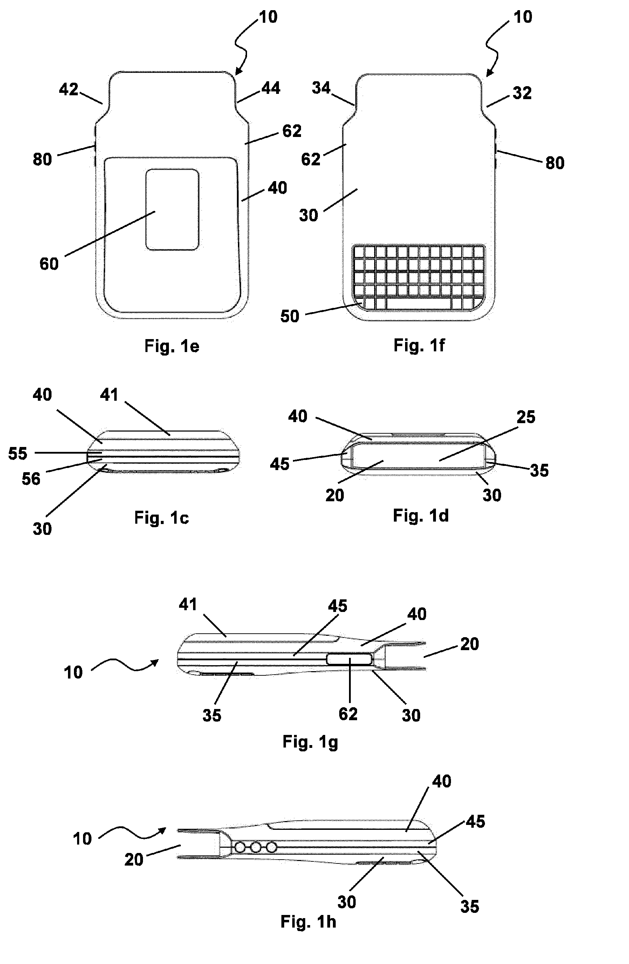

As detailed below, the enclosure depicted in the embodiment of the present invention shown in Figs 1-5 is sized so as to fit a mobile telephone. However, it would be appreciated by a person skilled in the art that such enclosures could be sized so as to enclose tablet computers, laptop computers, portable gaming devices and other portable electronic devices such as modems, MP3 players, digital cameras, hard drives, GPS navigation units and the like.

For convenience, these and like devices are described as "portable electronic devices" throughout the following description and figures.

Figs. 1a-h show an exemplary embodiment of the accessory enclosure of the present invention as a case (10) for receiving a portable electronic device (not shown).

In the case (10) shown, an opening (20) is formed in the top region of the case. The portable electronic device may be inserted into the cavity (25) in the case through the opening (20) and removed from the couch along the direction marked "A" also through the opening (20).

In the embodiment of the case (10) shown in Fig. 1, the case is formed by engaging a front panel (30) and back panel (40), by joining side walls (35) of the front panel (30) with side walls (45) of the back panel (40). As shown the back panel may be made in two pieces (40, 41) for providing access to a battery, as is discussed in more detail below.

However, it would be a appreciated by persons skilled in the art that such a configuration is exemplary, and a variety of other configurations and manufacturing techniques could be used for producing the case, as will be detailed below. It would be appreciated that a variety of textures and finishing may be applied to the external panels in accordance with user requirements.

Although the opening (20) in the embodiment shown is formed in the top of the case (10), it would be appreciated by a person skilled in the art, that such an opening (20) could be formed in the side walls (35, 45) without detracting from the scope of the present invention. This would allow for insertion and extraction of the portable electronic device from the enclosure in the direction of the side walls in the embodiment of the case depicted in Fig 1.

The front panel (30) includes cut-out portions (32, 34) which, together with corresponding cut-out portions (42, 44) of the back panel (40) form relief portions by which a user is able to grip the portable electronic device and extract it from the enclosure. The front and rear perspective views (Figs. 1a, 1b), the end views (Figs. 1c, 1d) and the side views of the case (10) (Figs. 1g, 1h) show side walls (35), (45) which extend from the front panel and back panel respectively, and wherein these side walls join the front and back panels together. These side walls (35, 45) front and back panels (30, 40, 41) and end walls (55, 56) define the cavity (25) of the case into which the portable electronic device is received.

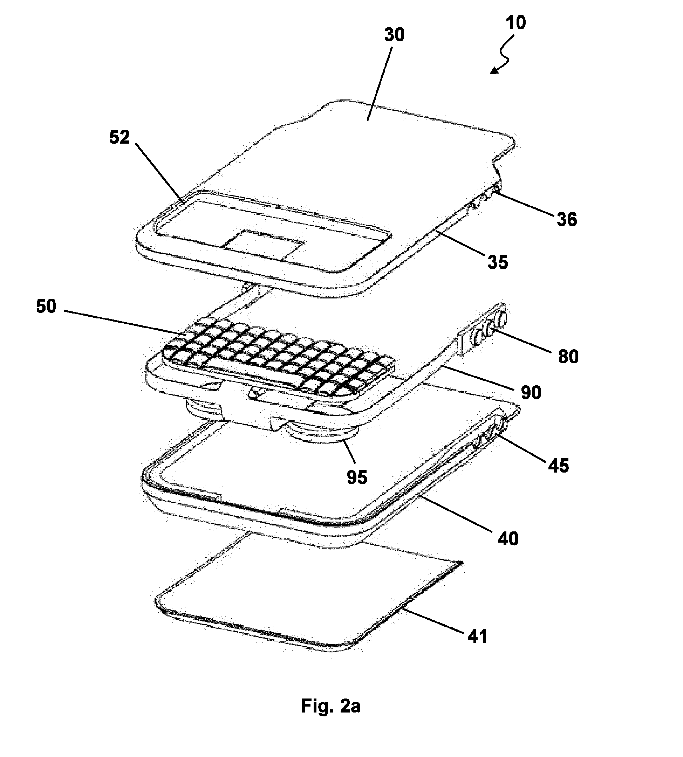

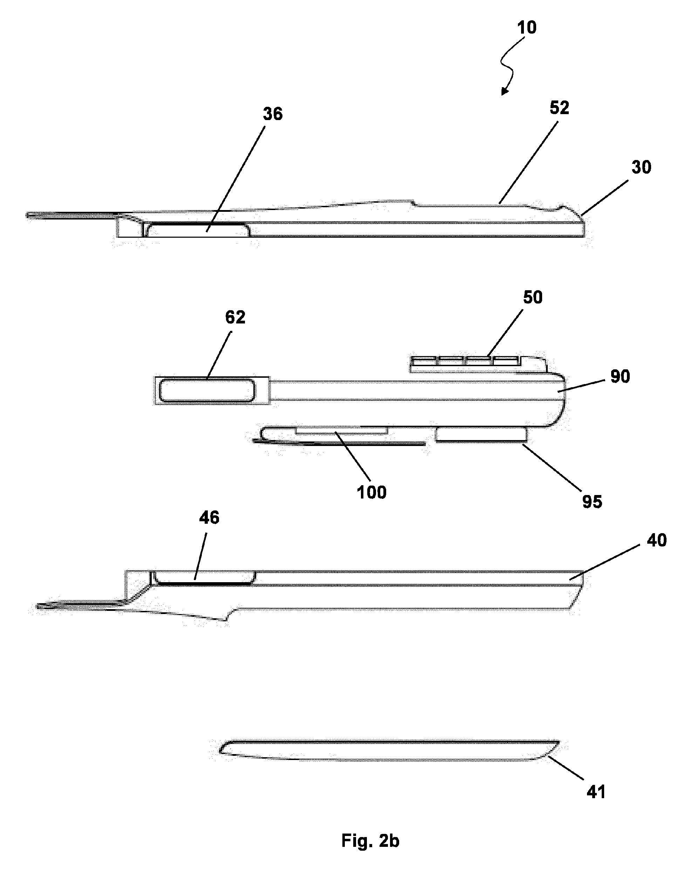

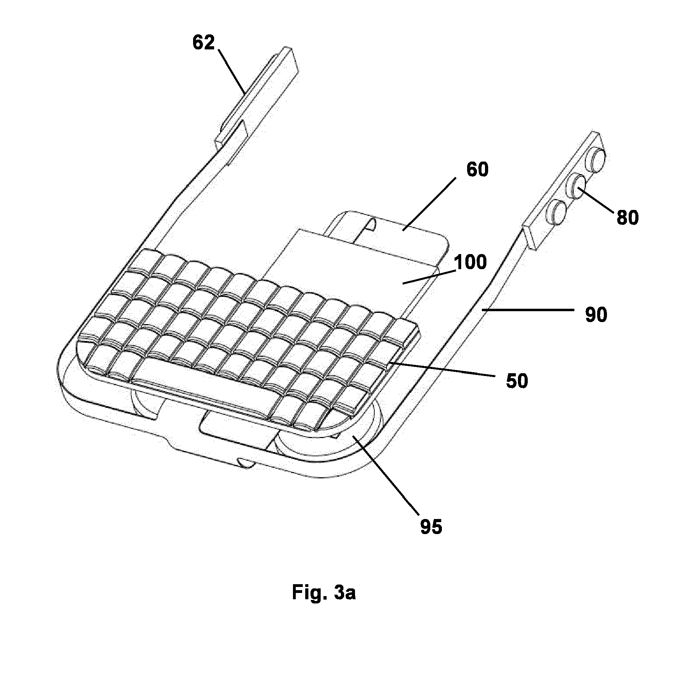

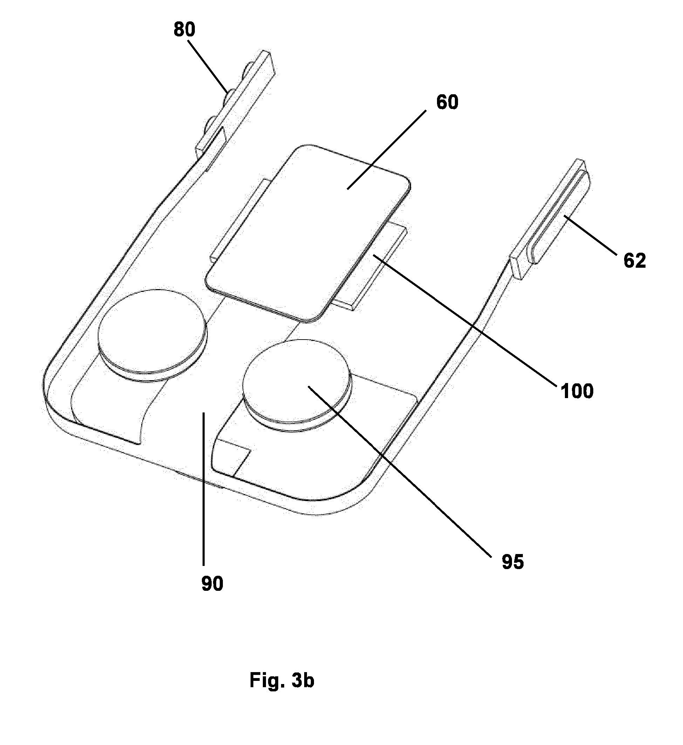

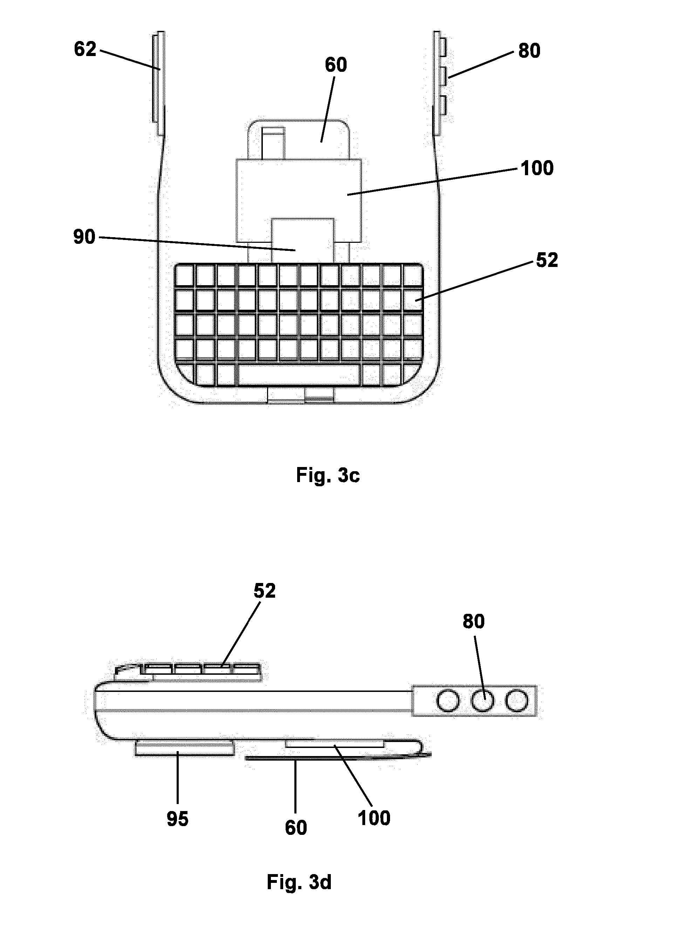

As depicted in the Figs 1a - 1h, the embodiment of the case depicted includes a mechanical keyboard (50) for receiving user input. The keyboard (50) may be included in a recess (52) in the front panel (30) and formed by keys (54) in a standard QWERTY arrangement as is known to persons skilled in the art. Optionally, the keyboard may be formed in other standard configurations such as the DVORAK, compact QWERTY or phone keypad arrangements or other such standard keyboard arrangements without departing from the scope of the present invention. Typically the keys could be formed as rubber, plastic, polyurethane or other suitable material as domes overlaying an underlying keyboard matrix (not visible in Figures). The circuit may be powered by electrical energy provided from one or more batteries located in the case (not shown) and seen in more detail in Figs. 2a, 2b and 3a, 3b. The keyboard (50) back may be optionally back lit through illumination of a LED (not shown) located in the case if desired.

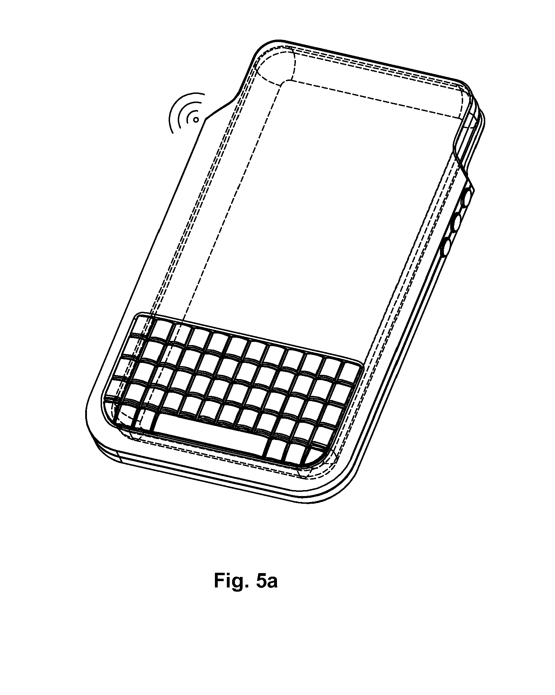

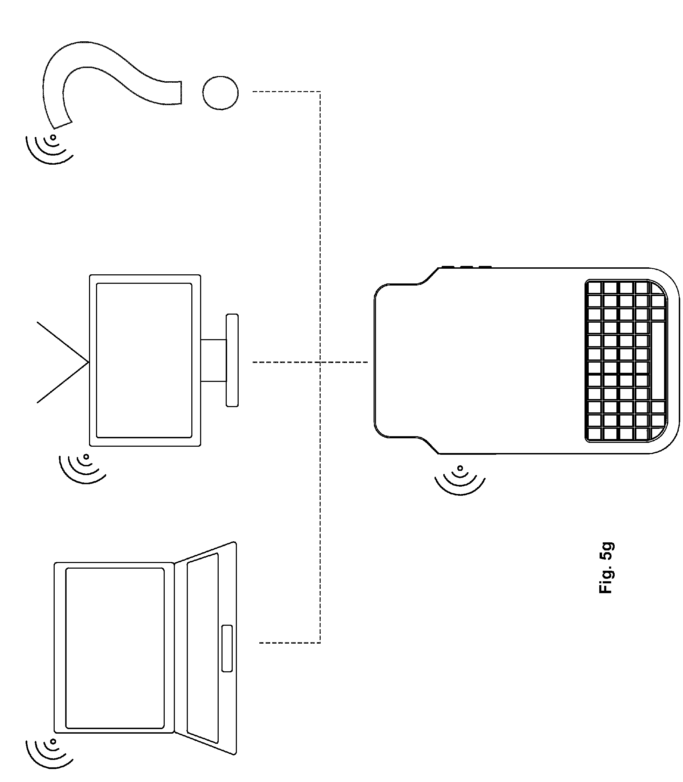

Also depicted in the embodiments shown in Figs. 1a - 1h is a touch sensing region 60, located in the back panel (40). In the embodiment depicted there is also shown a touch sensing region (62), located in the LHS side panel. It would be appreciated that other locations for these touch sensing regions are possible, and the depicted locations are merely exemplary. For example, the touch sensing regions could be located on both sides of the case, or the sides and back of the case, or on the front of the case above the keyboard depending on specific user requirements. Touch sensing regions (60, 62) may be configured to receive input from the fingers or thumbs of the user in various orientations of the case, as is discussed in more detail in reference to Figs. 5a - 5g.

User operable buttons (80) are arranged for receiving input from the user, and in the embodiment depicted these buttons are located in the upper right portion of the case. It would be appreciated by persons skilled in the art that alternate locations and shapes and sizes of the buttons could be provided.

The FPC (Flexible Printed Circuit) may also be configured such that it receives input from the touch sensor regions (60, 62), and buttons (80) and keyboard (50); for electrical communication with a PCB on which the communications module is included.

As shown, this FPC is located in a channel formed in the case between the respective user operable input means, however it would be appreciated that multiple alternate configurations could also be possible.

The keyboard (50), touch sensitive regions (60, 62) buttons (80) may be incorporated in the case in accordance with techniques known in the art. For example, the buttons (80) may be located about the case, on either side and on the back of the case respectively in channels formed such that these buttons protrude slightly above the surface level of the case and provide tactile feedback for operation by the user. The sensor devices (60, 62) may be formed as regions which may be included in the case during the manufacturing process. Advantageously, the FPC can be assembled in the manufacturing process in channels formed in the case, over which a liner for protecting the portable electronic device may be included.

In an exemplary embodiment, the front panel of the case may be approximately 2.0mm, and a recess formed within the case for the inclusion of a mechanical keyboard of approximately 1.0mm. This would allow for the flexible printed circuit typically approx 0.2mm thick; while the underlying domes being 0.25mm in thickness; and the rest of the space being occupied by the plastic keys of the keyboard.

Optionally, a raised profile may be included about the keypad to form a ramp which would protect the keys from inadvertent extraction by the user. An exemplary keyboard suitable for inclusion would be the Nordic™ nRF51 wireless keyboard which may include Near Field Communications elements for communication with the communication module. This channel may for example use the Bluetooth Human Interface Device (HID) standard, using a Generic Attribute Profile, and NFC elements to facilitate pairing. Such a keyboard may be configured to communicate using Bluetooth™ or other proprietary protocols with an option of changing between various modes of operation.

As shown, the main PCBA on which the communication module is mounted is formed for location at the bottom portion of the case, resulting in a slight increase in the length of the case. The PCBA may include an integrated circuit or the like for processing the information from the touch sensitive regions of the case, as well as a communication module. In an exemplary embodiment a NnRF8001 Nordic Semiconductor microcontroller may be utilised to provide Bluetooth and/ or 2.4 GHz communication channel management with a portable electronic device such as a smart phone or other device.

Such a device may include non-volatile on chip storage for storing the relevant configuration for the communication channel, including pairing information, establishment and connected modes of operation.

Also included in the lower portion of the case would be one or potentially two regions for containing the batteries used for the operation of the case. Optionally these battery containing regions may be formed as 'bumps' on the back of the case, to assist with the grip of the case in the hands of the user. The battery containing regions may be covered through the use of a removable cover to maintain the continuity of the external surface of the case.

The interaction between these components and an exemplary configuration of the FPC is shown in more detail in Figs. 2a, 2b and Figs. 3a- 3d.

Referring to Figs. 2a, 2b, there is shown an exemplary exploded view of the main components of the accessory enclosure of the present invention.

As depicted, the side walls (35) of the front panel (30) include recesses (36) for cooperation with the buttons (80) of the Flexible Printed Circuit film (90), together with a cavity (52) for receiving the mechanical keyboard. The side walls (45) of the back panel (40) also include recesses (46) for cooperating with the buttons (80) of the Flexible Printed Circuit film (90), and the touch sensing regions (62).

It can be seen that the various components of the accessory enclosure can be arranged so that they can press fit together as shown.

Referring to Figs. 3a, 3b, the mechanical keyboard (50), sensing regions (60, 62), buttons (80), Flexible Printed circuit film (90), batteries (95), PCB (100), and communication module (102) of the PCB (100) are connected together in electrical communication with each other so as to form an insert which is received within the accessory enclosure or case (10).

As would be appreciated by a person skilled in the art, these batteries may be "Button" type batteries which are alkaline or rechargeable depending on the way in which the case is used.

It would be appreciated by persons skilled in the art that the front face of the case could include a transparent window, or be formed from a partially transparent material. In this way, the user may be able to see the state of the portable electronic device, including text or activity appearing on the screen without having to remove the portable electronic device from the case. Where the user is able to view the text appearing on the screen of the device while the device is still retained inside the case, there is no need to remove the device from the case.

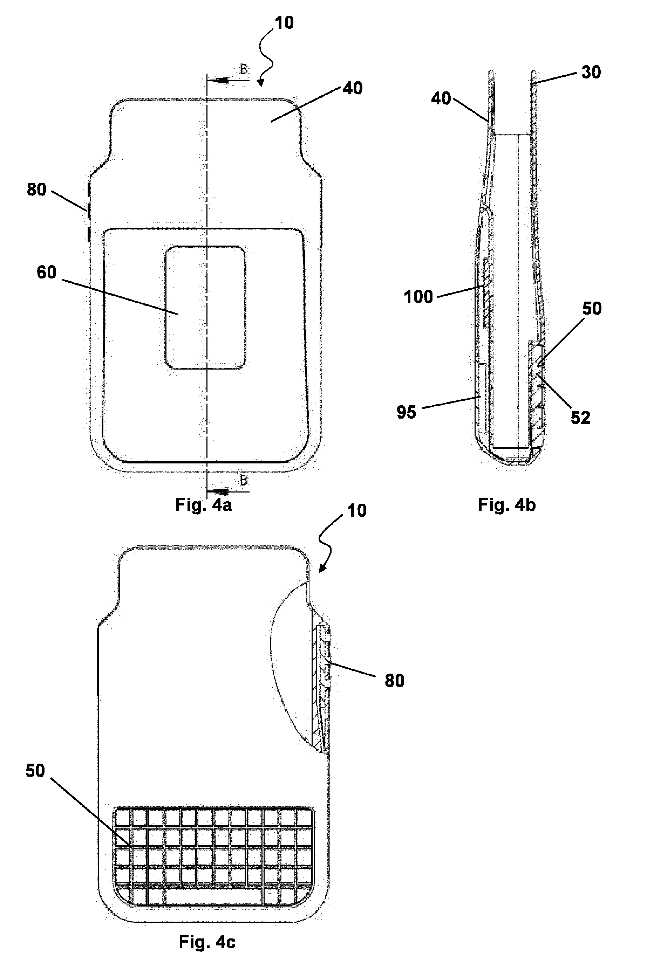

Referring to Fig. 4a, Fig. 4b, Fig. 4c, there is depicted a cross sectional view in various orientations of the accessory enclosure of the embodiment depicted in Figs. 1a-h in assembled form. The foregoing features of the front panel (30), back panel (40) and keyboard (50), keys (52), sensing regions (60), batteries (95) are displayed for ease of reference. It would be appreciated that the other features of the case depicted in Figs 1-3 are present but have not been labelled so as to enhance clarity.

Referring to Figs. 5a - 5g, there are shown exemplary ways whereby a user of the case is able to interact with and operate the case and a portable electronic device. Features described with references to Figs. 1-4 are also displayed in Figs. 5a-5g, but have been omitted for clarity.

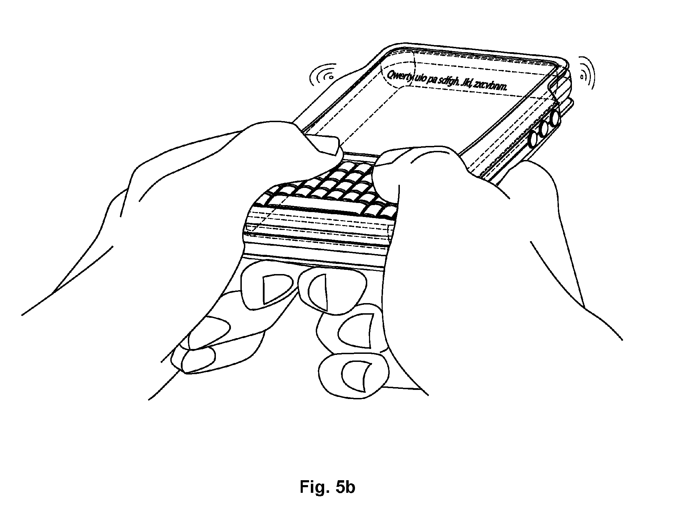

As seen in Figs. 5a, 5b, the user can slide the portable electronic device from the case (10), this action being configured to activate one or more of the mechanical keyboard (50), sensing regions (60, 62), buttons (80) for receiving input from the user.

Alternatively, these exemplary user input means may be activated through a particular combination of contact/ actuation/ keys on the case, or by accessing a particular setting or application on the portable electronic display device, and this activation can be set to occur when the device is received by the case or only once the device is removed from the case depending upon the desired settings. Further activation of the communication channel may be triggered automatically upon extraction from the case, selection of a predetermined or user specified input sequence or other such action by the user.

Advantageously, the case may be configured such that the user input means are not activated until required, so that the battery power required for processing and maintaining a communication channel between the case and the portable electronic device can be conserved. A visual indicator such as an LED or other region (not shown) may be configured so as to display an indication of a change in status of the portable electronic device engaged therein, including the establishment of a communication channel between the case and the portable electronic device.

Referring to Fig. 5b, there is shown the case (10) enclosing the portable electronic device therein. The user's hands are shown gripping the case while the text on the device is displayed to the user through the element (102). It would be appreciated by persons skilled in the art, that the element (102) displaying the text on the device may be a simple mechanical means such as transparent portion of the case, recess or mirrored screen or additional components such as an additional Liquid Crystal Display Screen (LCD) or e-ink component in communication with the display device.

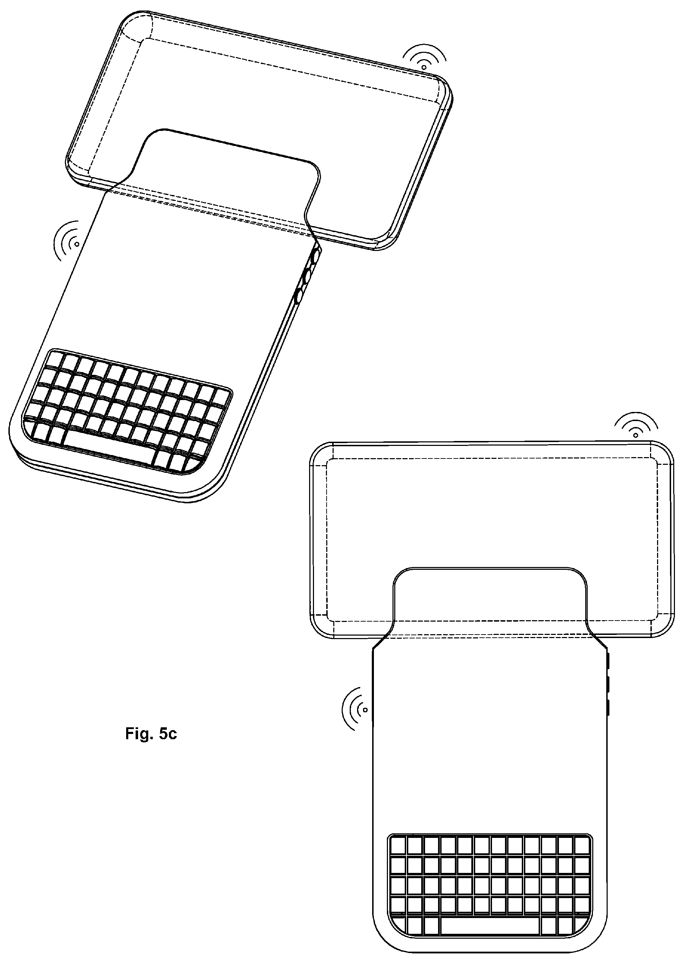

As shown in Fig. 5c, the case may be configured so that it is able to support the portable electronic device in the same orientation as stored in the case, or in an alternative orientation such as that shown. It would be appreciated that these orientations are merely exemplary.

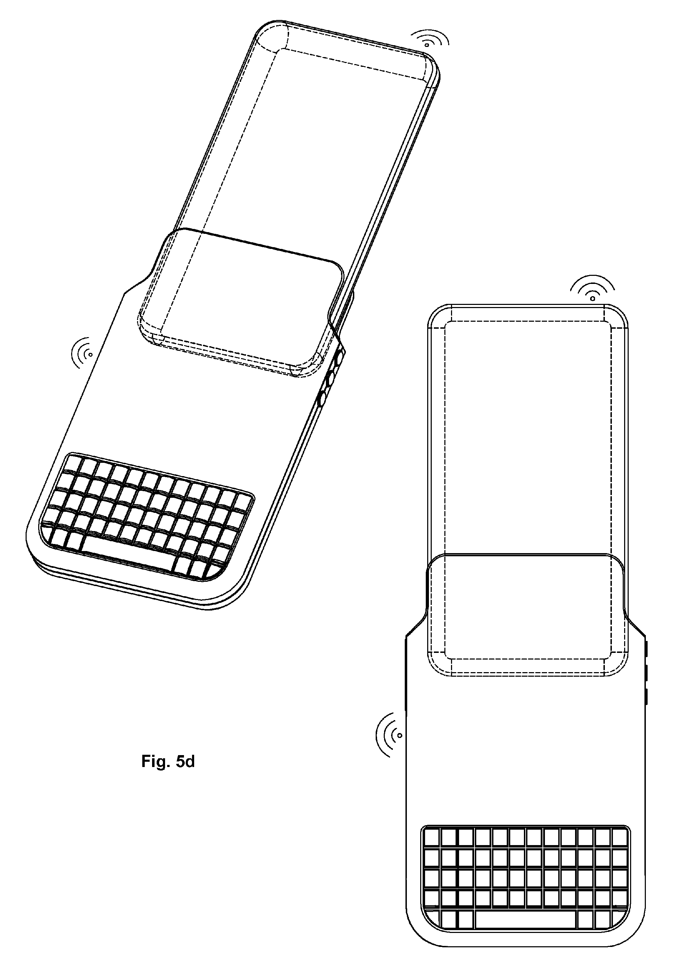

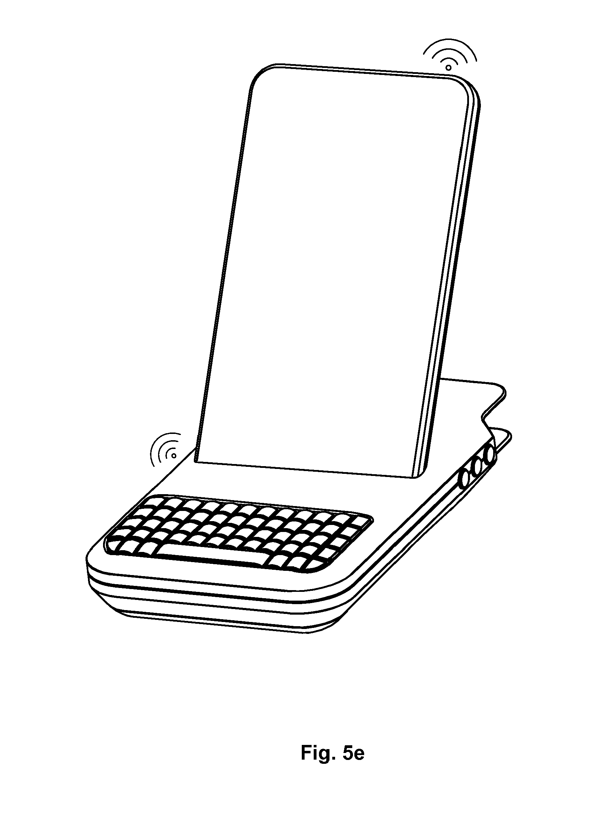

Another way the case may be used is to provide communication of user input when the case is located remote from the user, as shown in Fig. 5d. This may be particular useful where the portable electronic display device is connected to a further screen remote from the user, as shown in Fig. 5e.

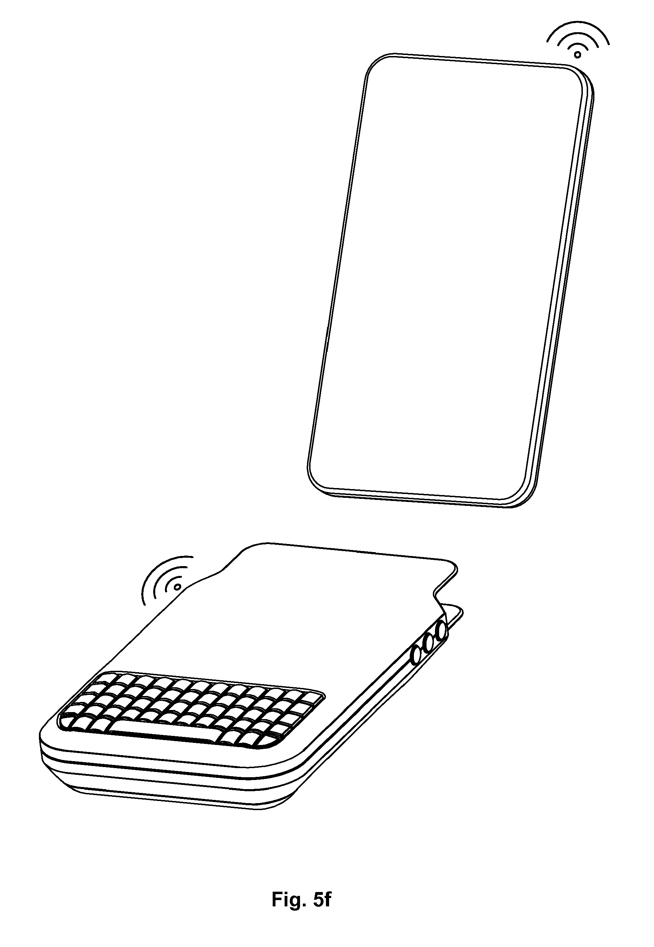

Additionally, the case may be configured such that when it is activated, it is able to establish communications with other portable electronic devices which are different from the portable electronic device received in the case as shown in Fig. 5f.

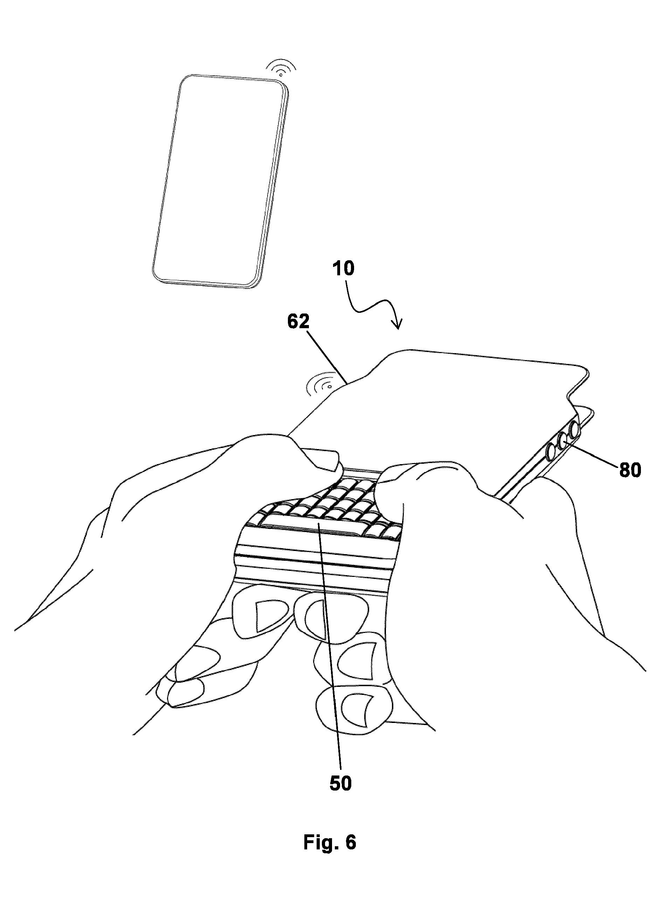

In an exemplary mode of operation depicted in Fig. 6, the case is held in both hands, with left and right index fingers able to operate touch sensitive regions/buttons (62, 80) on the sides of the case; as well as the back touch sensitive region (60), while the user's thumbs operate the keys (52) of the keyboard. The case is cradled by the other fingers of the user, while the index fingers and thumbs are active in providing input at the various user input locations of the case to the portable electronic display device.

For example, the touch sensor (62) on one side of the case may be configured to determine the number of taps which are received from the fingers of the user, at one or more regions of the sensor. In addition another touch sensor on another side of the case may detect vertical up and down movements of the finger of the user, and the portable electronic display device configured so as to translate such movements into vertical up and down movements of a cursor. Alternate interactions with a combination of touch/drag and tap would also be possible, and depending on the settings of the electronic display device initiate the activation of relevant functions.

The touch sensitive region located on the back part of the case, or portions of this region may be operated by the index finger or second finger in an upward or downward touch function (or left/right touch) to similarly provide user input to the portable electronic device from the case.

It would be appreciated by persons skilled in the art that selected keys or particular combinations of selected keys may be configured to provide alternative instructions depending upon the combination of the with user interaction with the touch sensitive region, button and keys of the keyboard in combinations. Alternatively, such user input from one means may be independent from user independent received at another input means.

Once the user input at any one or more of the touch sensor regions and buttons (80) and keyboard (50) or other input means is received at the portable electronic display device, the parameter received can be configured to trigger certain functions using the settings of the portable electronic display device.

It would be appreciated that any of a range of functions could be assigned to the buttons of case (80), or indeed to a particular combination of keys of the keypad or specific user interaction with the touch sensitive regions depending on how the settings of the portable electronic device. The functions may be determined by settings of a particular application which is currently operating on the portable electronic device (ie. different behaviour may be initiated of the device even from the same user interaction depending upon which application is currently in operation on the portable electronic device. Alternatively, the actions which are performed by the portable electronic device may be consistent in the sense that irrespective of the particular application which is operating on the display device; the same behaviour is triggered.

This may be particularly useful when the portable electronic device is connected to a large screen display, and the user (with the case) is located remote from the large screen display.

For example, the portable electronic device may be configured such that actuation of the buttons, specific contact with the touch sensitive regions or key combinations may be used as a remote control for the portable electronic device delivery of content to an external display which is connected to the portable electronic device. These functions could include controlling a presentation, movies or music, internet browsing or scrolling or for operation in gaming and display on the external display.

Optionally, there may also be include one or more visual indicators on the case for readily communicating to the user the state of the device contained therein. The visual indicator may be a light or an LED which is configured so as to provide visual signals indicative of the state of the mobile device in the case to the user, whether the case is engaged with or separate from the portable electronic device. For example, when a communication channel has been established between the case and the portable electronic device, the light (such as an LED) may be configured to flash intermittently. If the portable electronic device is placed in a silent mode, the light or LED may be configured such that it flashes or otherwise changes colour, depending on whether or not a communication channel has been established and if an incoming signal may have been received. The LEDS may be located on the side of the case, or alternatively, anywhere on the exterior of the case where they are visible to the user. For example, the LEDS or visual indicators may be located so as to extend from the FPC.

Alternatively, another screen or information display- element (102) may be included on the case, for displaying the status of the portable electronic display device which is in communication with the case.

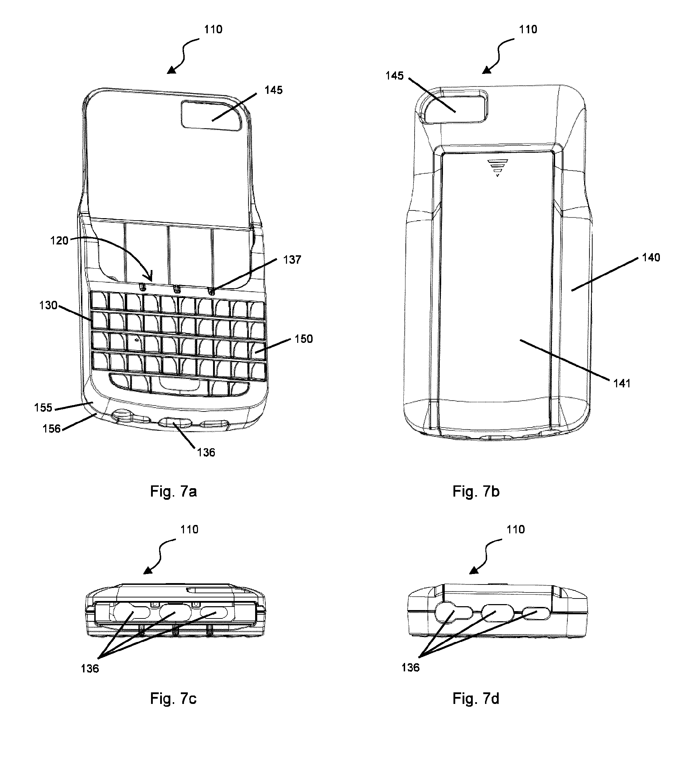

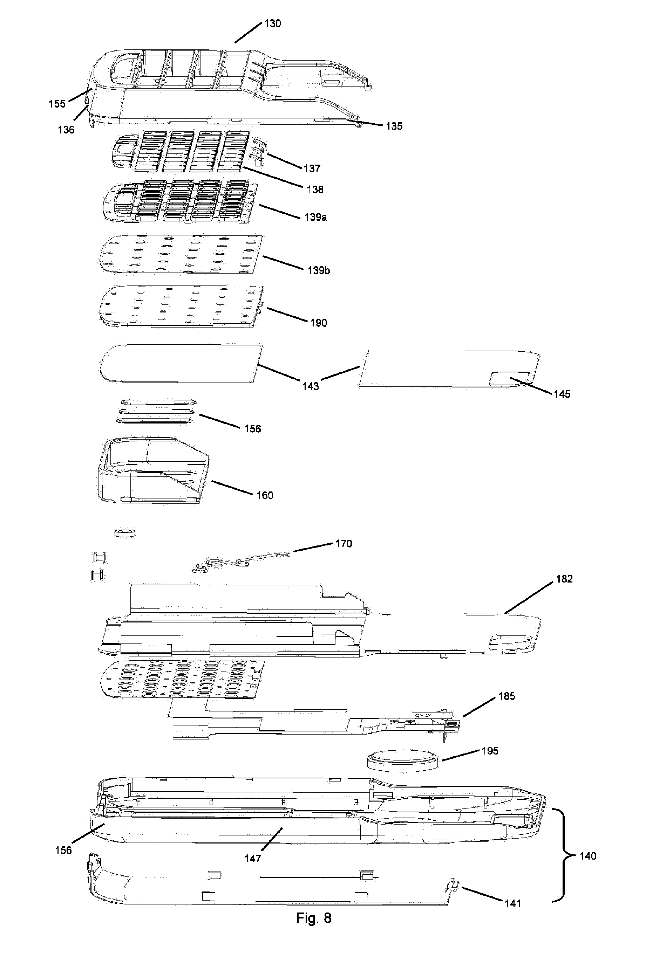

A further embodiment of an enclosure of the present invention is depicted in Figs. 7a to 7h and Fig. 8. In the embodiment of the case (110) shown in Figs. 7a to 7h, the case is formed by engaging a front panel (130) with a back panel (140) by joining sidewalls (135) of the front panel with sidewalls (147) of the back panel (140). As shown in Fig. 8, the back panel may be made in two portions (140, 141) providing access to a battery (195) as is discussed in more detail below.

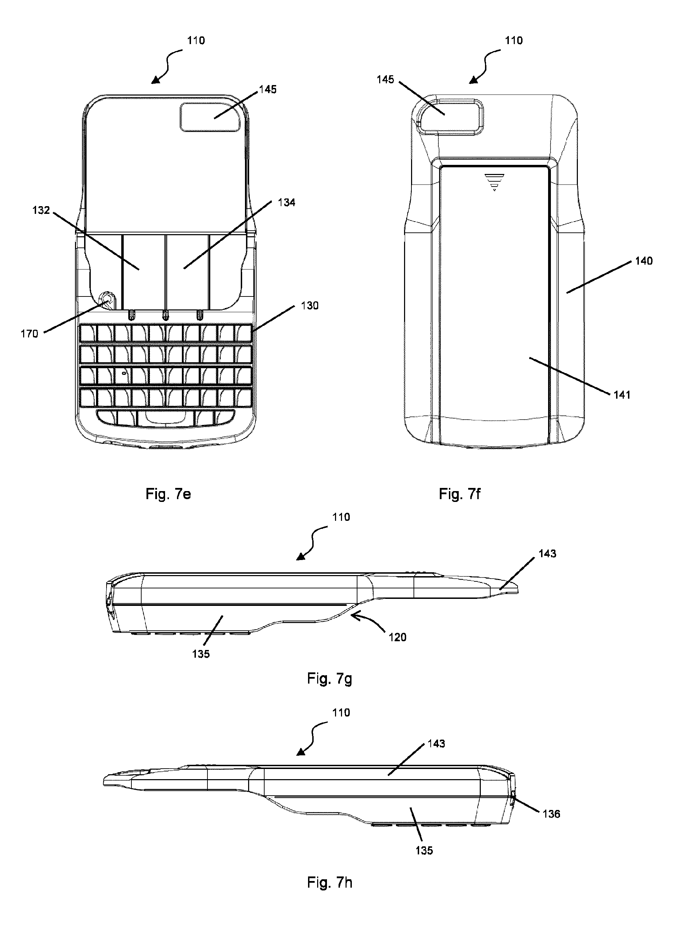

An opening (120) is formed in the case (110) for allowing the insertion and extraction of the portable electronic device from the enclosure via the opening (120) in a direction of along the sidewalls as shown in the embodiment depicted in Figs. 7 and 8. In addition to facilitate the extraction of the portable electronic device, the front panel includes cut-out portions (132, 134) by which the user can grip the portable electronic device and extract it.

It can be seen that the cavity of the case is defined by the sidewalls (135, 147), by the partially cut away front and back panels (130, 140, 141) and end walls (155, 156) into which the portable electronic device is received via the opening (120).

As shown, there is also included a mechanical keyboard (150) for receiving user input. This keyboard may be optionally backlit for operation in low light environment. It would be appreciate that user operable buttons (not shown) may also be arranged in the various positions on the case for receiving input from the user.

Referring to the exploded view depicted in Fig. 8, it can be seen that the front panel (130) and has sidewalls (135) with apertures (136) formed therein for providing connector and cable access. The keyboard keys (138) and indicator lights (137) are inserted in corresponding apertures formed in the body of the front panel. The keyboard domes keys may be typically formed from rubber/soft plastic and rest upon a silicon actuated membrane (139a) and dome mount panel (139b) for receiving input from the user which is communicated through to a flexible printed circuit board (190). The keyboard arrangement on the front panel rests on a back plate (143) which has a hole defined (145) therein. The hole (145) is formed in an appropriate location so as to enable operation of a camera of the portable electronic device enclosed in the case. Silicon pads (156) are received on a plastic cup (160) for facilitating and interference fit of the portable electronic device in the case and the retention and then extraction therefrom by a user..

The cup (160) is movable against the action of a torsion spring (170) such that the portable electronic device is retained in the case in a secured position through the interference fit. The insertion of the device deforms the silicon pads slightly, as the physical sizing of the electronic device relative to the cavity of the case contacts and overcomes the resistance provided by a torsion spring (170). The combined interaction of the sizing of the case cavity relative to the portable electronic device, the deformable silicon pads and urging provided by the torsion spring to the cup cooperate to press the device against the walls and front panel of the case, thereby securing the portable electronic device in position.

When a user seeks to extract the device from the case, the force of the spring/silicon pads is overcome thereby allowing the device to be extracted from the case through gripping by the user at the cut-out portions (132, 134) formed in the front panel (130).

The extraction of the device from the secured position, may be facilitated by the cup once moving along guide rods (not shown) formed in the back panel (140), which guide the orientation of the cup relative to the case under action of the spring.

It would be appreciated that the retention/release arrangement such as that proposed is exemplary, and a similar mechanical arrangement which provides a retention force for securing the portable electronic device within the case could also be employed, without departing from the scope of the present invention.

A flexible printed circuit (185) could be arranged in the back case, for providing the net communication channel for attachment to the keyboard. Additionally, the FPC (185) is in electrical communication with the battery (195).

Advantageously, a number of arrangements may be employed to charge the battery (195) of the case. In the embodiment depicted, the replaceable CR2032 type battery has been demonstrated to last up to approximately three months of typical operation. It may be simply replaced by a user when used; and optionally a spare battery may be stored in the case. Alternatively, in a further arrangement an additional battery pack (not shown) may be fitted in place of the detachable back panel (141). In such an arrangement, it is envisaged that the detachable battery pack could be removed and separately charged on a separate desk charger.

In still a further arrangement, the battery (195) may be charged by an external charger.

Alternatively, the back panel (140) may include a power receiving coil included either on the detachable back panel, or in the actual back panel itself. A case in which the back panel is fitted with such a panel receiving coil would be able to be charged through powered wireless transfer. In powered wireless transfer, the power receiving coil in the accessory case could receive power from a power transmitting coil, transmitting power from the transmitting coil to the receiver.

The indicator light (137) could be configured to demonstrate when the battery power for operation of the case has reached critical level - e.g. for example for by a change in colour although other arrangements would be possible.

Optionally, the battery pack may be a separate rechargeable battery pack which can separately power the internal battery of the case, the case itself and potentially the device within the case.

Optionally, the case may be modified to receive the portable electronic device directly or a portable electronic device which is further in case by a protection member extending about the portable electronic device. This additional protection member may be in plastic or metal and would act as an additional means for protecting the portable electronic device when engaged in the case, and when removed from the case.

In the embodiment depicted in Figs. 7 and 8, the device may be securely retained in the holding cup in an initial position. The user can extract the portable electronic device from the case by gripping the portable electronic device and pulling the device upwards. This serves to overcome the interference fit provided by the torsion spring and the deformable silicon insert.

The portable electronic device may be extracted partially from the case to allow access to the lower portion of the electronic device and interaction therewith. Alternatively, the portable electronic device may be completely removed and separated from the case.

In still a further embodiment, it is envisaged that the case may be modified to retain the device in alternate configurations including such configurations as depicted in Figs. 5c and 5d. Accordingly, the case of the present invention can at least partially enclosed the portable electronic device or alternatively be detached for user operation.

It would be appreciated that the embodiment depicted in Figs 7 and 8 is merely exemplary and other arrangements and alternatives could be utilized without detracting from the scope of the present invention.

The cover of the present invention provides for numerous advantages over the prior art. Although there exist certain external components such as keyboards, trackpads, stylus pads, mouse devices and other such separate components for providing user interaction with personal electronic devices, these devices all share fundamental drawback that they are further devices required in addition to the case and the portable electronic display device. A user of such devices must remember to bring such devices, and also must carry and use such devices separately. Further a user must ensure that such devices have appropriate power and battery levels in order to communicate with the portable electronic display device. This can mean that the user of such devices is compelled to include additional batteries, charging adapters and the like when travelling with such devices.

By contrast, as the case of the present invention is designed to at least partially enclose the portable electronic device; it becomes a part of that device until it is detached for user operation. This means that that case is not a separate item that must be remembered, as it becomes part of the overall portable electronic device. The case of the present invention may be configured so that it is powered by on board batteries, which may be rechargeable from either the portable electronic device itself or from the charging unit of that device. Alternatively, the device may itself include an additional storage space for a spare battery, which can be introduced into the device when required by the user.

In addition, the accessory enclosure of the invention can provide a more precise , efficient and accurate way of obtaining input from the user than directly operating touch sensitive screens which may be restricted in size, or accuracy. The direct tactile feedback from a mechanical keyboard and separately actuatable buttons can assist in reducing the potential miscommunication and embarrassing communications which may be inadvertently or incorrectly sent to a recipient.

Optionally, the case may include at least one energy store for providing electrical power to the communication module for communication of user input on the case to an electronic device engaged therein. Preferably the energy store may be charged by directly charging the case, charging a detachable panel containing the energy store when attached to the case, charging the detachable panel containing the energy store when detached from the case, or by powered wireless transfer.

Optionally, the case may include a housing for receiving the portable electronic device, wherein the housing urges the portable electronic device into contact with the walls defining the cavity through a resilient biasing means attached to the housing.

The present invention may be defined according to the following numbered clauses:
1. A case for a portable electronic device wherein the at least one or more sensing regions detect the application by the user to the sensing region of an action selected from the group comprising any one or more of the following actions:
   impact force applied to the sensing region, a tap of the sensing region, motion of one or more fingers on the sensing region, initiation of contact of one or more fingers on the sensing region, removal of contact of one or more fingers from the sensing region and the position of contact of one or more fingers on the sensing region.
2. A case for a portable electronic device wherein the receiving portion of the body comprises a protective enclosure at least partially enclosing the portable electronic device in a cavity therein, said receiving portion having an opening in communication with the cavity for allowing passage of the portable electronic device therethrough.
3. A case for a portable electronic device wherein the user operable input means includes
   at least one or more sensing regions for receiving a parameter from the user, wherein said parameter is for controlling one or more functions of the portable electronic device.
4. A case for a portable electronic device wherein the mechanical keyboard is attached to the case in a recess formed in the body of the case.
5. A case for a portable electronic device wherein the at least one or more sensing regions detect the application by the user to the sensing region of an action selected from the group comprising any one or more of the following actions:
   impact force applied to the sensing region, a tap of the sensing region, motion of one or more fingers on the sensing region, initiation of contact of one or more fingers on the sensing region, removal of contact of one or more fingers from the sensing region and the position of contact of one or more fingers on the sensing region.
6. A case for a portable electronic device wherein detection of the motion and position of a user's finger being drawn across a sensing region is interpreted by a controller coupled to the sensing region for generation of a signal corresponding to the detected motion and position of the user's finger.
7. A case for a portable electronic device wherein the controller is configured so as to generate a positional signal for providing correspondence of said detected motion and position of the user's finger on the sensing region with a change to the relative position of a cursor or pointer on a display screen of the portable electronic device.
8. A case for a portable electronic device wherein a first sensing region and a second sensing region are located on opposed sides of the opening to said cavity for actuation by the index fingers of a user when gripping the case with both hands and a third sensing region is located on the back portion of the case.
9. A case for a portable electronic device wherein the action of the user's fingers detected by a sensing region is modified by a user.
10. A case for a portable electronic device wherein the action of the user's fingers detected by a sensing region is modified by a program executable on the portable electronic device.
11. A case for a portable electronic device wherein an sensing region further comprises a plurality of independent sub regions, each sub region detecting an action of the finger of a user to that sub region separate from an action of the finger of a user to an adjacent sensing sub region.
12. A case for a portable electronic device wherein the action detected by at least one of the plurality of sub regions is modified through operation of any one or more of the following selected from the group comprising a program operating on the personal electronic device, a combination of parameters supplied to user input means, a predetermined setting on the personal electronic device.
13. A case for a portable electronic wherein the sensing regions are connected by a flexible printed circuit to the communication module.
14. A case for a portable electronic device wherein the display screen of the portable electronic devices is visible through any one or more of an opening formed in the body, a transparent region formed in the body, a selectively opaque region of the body, or a movable opening of the body.
15. A case for a portable electronic device wherein the portable electronic device is engaged with the case in a first orientation and upon removal of the portable electronic device from the case, the case retains the device in a second orientation which is different from the first orientation.
16. A case for a portable electronic device wherein the visual indicator changes appearance upon a communication channel being established between the case and the portable electronic device.
17. A case for a portable electronic device further including a second opening in the receiving portion of the body for partially receiving therein the portable electronic device in a predetermined orientation upon the removal of the portable electronic device from the cavity.
18. A case for a portable electronic device according to any one of the preceding claims further including a means for illumination of the user operable input device.
19. A method for communicating information between a portable electronic device and a case for said portable electronic device, the case having a user operable input means and a communication module, the method comprising;
   receiving at least one parameter from a user at a user operable input means on the case,
   establishing a communication channel between the case and the portable electronic device,
   transmitting a signal from the case to the portable electronic device over the established communication channel, said signal based upon the at least one parameter provided by the user to the user operable input means,
20. A method for communicating information between a portable electronic device and a case for said portable electronic device further including the step of processing information received over the established communication channel at the portable electronic display device.
21. A method for communicating information between a portable electronic device and a case for said portable electronic device wherein establishing of the communication channel is performed upon the occurrence of any one of the events selected from the group including:
   at least partial removal of the portable electronic device from the protective enclosure, receiving predetermined user input at the user operable input means, releasing the portable electronic device from the case, releasing and rotation of the device to a predetermined orientation, removal of the portable electronic display device from the case together with a predetermined user input sequence at the user operable input means.

While the present invention has been explained by reference to the examples or preferred embodiments described above, it will be appreciated that those are examples to assist understanding of the present invention and are not meant to be restrictive. Variations or modifications which are obvious or trivial to persons skilled in the art, as well as improvements made thereon, should be considered as equivalents of this invention.

Furthermore, while the present invention has been explained by reference to portable electronic devices with touch sensitive regions, buttons and keyboard and where the case is sized relative to smart phones it should be appreciated that the invention can apply, whether with or without modification, to other portable electronic devices and additional user input means without loss of generality.

## Claims

**1.** A case for a portable electronic device comprising:
a body, the body comprising:
a receiving portion for releasably receiving a portable electronic device,
at least one user operable input means for detecting user selection of at least one parameter,
a communication module for providing a communication channel between the case and the portable electronic device,
wherein a signal determined from a user selection of the at least one parameter is communicable from the case to the portable electronic device across the communication channel.

**2.** A case for a portable electronic device according to claim 1 wherein the receiving portion of the body comprises a protective enclosure at least partially enclosing the portable electronic device in a cavity therein, said receiving portion having an opening in communication with the cavity for allowing passage of the portable electronic device therethrough.

**3.** A case for a portable electronic device according to either one of claim 1 or claim 2 wherein the at least one user operable input means of the body is selected from the group including any one or more of the following: mechanical keyboard, sensing region of the body, user actuatable switch.

**4.** A case for a portable electronic device according to any one of the preceding claims wherein the signal is based upon a combination of an input parameter received at a first user operable input means and at least one other input parameter received at a user operable input means other than the first user operable input means.

**5.** A case for a portable electronic device according to claim 4 or claim 5 wherein the input means is a mechanical keyboard selected from the group comprising a plurality of keys having indicia arranged in the QWERTY layout of a keyboard, a plurality of keys arranged in an alphanumeric array corresponding to numerical values 1-9 and letters A-Z, a plurality of keys arranged in a modified form of the QWERTY keyboard, a plurality of keys arranged in an array and having indicia corresponding to alpha-numeric keys for alphabets other than English, a plurality of keys arranged in an array and having indicia of symbols, a plurality of keys in an array including indicia corresponding to functions of the personal electronic device.

**7.** A case for a portable electronic device according to any one of claims 2-6 wherein the display screen of the portable electronic device is visible to a user.

**8.** A case for a portable electronic device according to any one of the preceding claims wherein the signal transmitted to the portable electronic device is selected from the group comprising textual input, symbols, and control signals operable to change the state of the portable electronic device.

**9.** A case for a portable electronic device according to any one of the preceding claims wherein the case is configured to establish a further communication channel with other portable electronic display devices

**10.** A case for a portable electronic device according to any one of the preceding claims wherein the communication module of the case is configured such that the channel is established upon an action selected from the group comprising at least partial removal of the portable electronic device from the protective enclosure, receiving predetermined user input at the user operable input means, releasing the portable electronic device from the case, releasing and rotation of the device to a predetermined orientation, removal of the portable electronic display device from the case together with a predetermined user input sequence at the user operable input means.

**11.** A case for a portable electronic device according to any one of the claims wherein 1-10 wherein the portable electronic device is engaged with the case in a first orientation and upon at least partial removal of the portable electronic device from the case, the case retains the device in a second orientation which is the same as the first orientation.

**12.** A case for a portable electronic device according to any one of the previous claims further including a visual indicator for displaying an indication of a change in status of the portable electronic device engaged therein.

**13.** A system for providing user interaction with a portable electronic display device, the system comprising
a portable electronic display device,
a cover for at least partially enclosing the portable electronic display device, said cover including a user operable input means for receiving a user selection of at least one input parameter,
wherein selection of at least one input parameter at said user operable input device is communicated over a communication channel to the portable electronic display device for processing on the portable electronic device.

**14.** A system for providing user interaction with a portable electronic display device over a communication channel according to claim 1 wherein the cover is a protective enclosure which comprises a body enclosing the portable electronic display device in a cavity therein, said body having an opening adjacent the cavity for passage of the portable electronic display device therethrough.

**15.** An enclosure for a portable electronic device comprising:
a body for enclosing the portable electronic device in a cavity therein, said body having an opening in communication with the cavity for allowing passage of the portable electronic device therethrough,
the body including at least one user operable input means for detecting user selection of at least one parameter,
a communication module for providing a communication channel between the case and the portable electronic device,
wherein a signal determined from a user selection of the at least one parameter of the user operable input device is communicable from the case to the portable electronic device across the communication channel.
